# EUROPEAN PATENT APPLICATION

(11) **EP 2 133 515 A1**
(43) Date of publication of application: **16.12.2009**
(21) Application number: 07741439.9
(22) Date of filing: 11.04.2007
(51) Int. Cl.: F01K 23/10, F01K 9/00, F02C 3/30, F02C 6/18, F02C 7/143, F02C 7/224

(54) **POWER SUPPLY EQUIPMENT FOR NATURAL GAS LIQUEFACTION PLANT**

(71) Applicant: Hitachi, Ltd., Chiyoda-ku Tokyo 100-8280 (JP)
(72) Inventor: TAGAWA, Hisato, Chiyoda-ku, Tokyo 100-8220 (JP); MARUSHIMA, Shinya, Chiyoda-ku, Tokyo 100-8220 (JP); HORITSUGI, Mutsumi, Chiyoda-ku, Tokyo 100-8220 (JP)
(74) Representative: MERH-IP Matias Erny Reichl Hoffmann
(86) International application number: PCT/JP2007/058003
(87) International publication number: WO 2008/047489

(57) **Abstract**

There is provided power supply equipment comprising: a vaporizer which heats LNG by use of first cooling water; a condenser which heats the LNG from the vaporizer by use of air; a compressor which compresses the air from the condenser; a combustor which combusts the air from the compressor and the natural gas from the condenser; a gas turbine which is driven by the combustion gas from the combustor; a heat recovery steam generator which generates steam; a steam turbine which is driven by the steam of the heat recovery steam generator; a steam condenser which condenses the steam of the steam turbine by use of the first cooling water; a cooling tower which cools the first cooling water of the vaporizer by use of second cooling water; the supply water tank which stores the condensed water of the condenser; a pipe which supplies the water of the supply water tank to a steam turbine system; and a pipe which supplies the water of the supply water tank to a steam-condenser cooling system. This makes it possible to configure combined-cycle power generation equipment even in an area where procurement of water is difficult, thus allowing efficient production of liquefied natural gas.

## Description

### Technical Field

The present invention relates to power supply equipment used in a natural gas liquefaction plant for producing liquefied natural gas.

### Background Art

A natural gas liquefaction plant cools natural gas by use of a refrigerant compressed by a refrigerant compressor to produce liquefied natural gas (LNG). As a power supply source for the natural gas liquefaction plant, gas turbine equipment using natural gas as fuel may be used. In order to use the natural gas as a fuel, it is typically necessary to evaporate (re-gasify) the natural gas because it is stored in a liquid state. Therefore, LNG evaporation equipment is required separately from the gas turbine equipment.

With such evaporation equipment, it is common to use sea water as a heat source for its high temperature side. This method, however, leads to discharging the cold energy of LNG into the sea, resulting in problems in terms of environmental effects, thermal efficiency, etc. In view of this point, as power generation equipment intended for LNG evaporation without the use of sea water, some pieces of equipment adds a heating-medium turbine operating on a heating medium, such as a propane gas, to combined-cycle power generation equipment, thereby performing LNG evaporation by use of exhaust of the heating-medium turbine and a steam turbine (refer to Patent Document 1).

Patent Document 1: JP,A-5-113108

### Disclosure of Invention

### Problems to be solved by the Invention

Meanwhile, in comparison with gas turbine equipment commonly used as a power source of a natural gas liquefaction plant, the combined-cycle power generation equipment also used in the above-mentioned technique is superior in thermal efficiency and capable of efficiently producing liquefied natural gas.

However, the introduction of the combined-cycle power generation equipment is difficult in an area where procurement of a massive amount of water to be used for steam turbines is not possible (for example, a midland). Some of natural gas producing areas do not satisfy this condition. In such natural-gas-producing areas where the use of the combined-cycle power generation is disadvantageous in terms of price competition in comparison with areas where the combined-cycle power generation can be used, commercialization is postponed in some cases.

An object of the present invention is to provide power supply equipment of a natural gas liquefaction plant which is capable of efficiently producing liquefied natural gas even in an area where procurement of water is difficult.

### Means for Solving the Problem

In order to accomplish the above-mentioned object, the present invention provides power supply equipment for a natural gas liquefaction plant which supplies power to the natural gas liquefaction plant for producing liquefied natural gas, the power supply equipment comprising: a gas turbine system which includes a fuel pipe which circulates liquefied natural gas therethrough, a vaporizer which performs heat exchange between the liquefied natural gas in the fuel pipe and first cooling water to heat the liquefied natural gas, a condenser which performs heat exchange between the liquefied natural gas from the vaporizer and air to evaporate the liquefied natural gas, a compressor which compresses the air cooled by the liquefied natural gas in the condenser, a combustor which mixes the air compressed by the compressor and the natural gas that has passed the condenser and combusts the air-gas mixture, and a gas turbine which is driven by the combustion gas generated by the combustor; a steam turbine system which includes a heat recovery steam generator which generates steam by use of the exhaust gas of the gas turbine, a steam turbine which is driven by the steam generated by the heat recovery steam generator, and a steam condenser which condenses by use of the first cooling water the steam that drove the steam turbine; a steam-condenser cooling system which includes a cooling tower for cooling by use of second cooling water the first cooling water cooled by the liquefied natural gas in the vaporizer and supplies the first cooling water cooled by the cooling tower to the steam condenser; and a supply water system which includes a supply water tank which stores the condensed water obtained from the air cooled by the condenser, a first water supply pipe which supplies the water of the supply water tank to the steam turbine system, and a second water supply pipe which supplies the water of the supply water tank to the steam-condenser cooling system.

### Advantages of the Invention

In accordance with the present invention, it is possible to configure combined-cycle power generation equipment even in an area where procurement of water is difficult, allowing efficient production of liquefied natural gas.

### Brief Description of the Drawings

Fig. 1 is a schematic configuration diagram of power supply equipment for a natural gas liquefaction plant according to a first embodiment of the present invention.
Fig. 2 is a schematic configuration diagram of power supply equipment for a natural gas liquefaction plant according to a second embodiment of the present invention.

### Description of Numerals

- 2: Fuel pipe
- 3: Vaporizer
- 4: Condenser
- 5: Heater
- 6: Compressor
- 7: Combustor
- 8: Gas turbine
- 20: Heat recovery steam generator
- 21: Steam turbine
- 22.: Steam condenser
- 30: Cooling tower
- 41: Water supply pipe
- 42: Water supply pipe
- 34: Circulating pump
- 43: Water supply pipe
- 46: Water supply pipe
- 53: Flow-rate control valve
- 55: First fuel-spray-quantity control valve
- 56: Second fuel-spray-quantity control valve
- 61: Fuel-temperature measuring apparatus
- 63: Air-temperature measuring apparatus
- 64: Steam-condenser-cooling-water-temperature measuring apparatus
- 65: Condensed-water-temperature measuring apparatus
- 71: Two-phase flow-rate measuring apparatus
- 72: Compressed-air flow-rate measuring apparatus
- 73: Cooling-tower-cooling-water-flow-rate measuring apparatus
- 74: Condensed-water-flow-rate measuring apparatus
- 75: Collected-water-quantity measuring apparatus
- 76: First water-spray-flow-rate measuring apparatus
- 77: Second water-spray-flow-rate measuring apparatus
- 85: Water recovery system
- 86: Circulating pump
- 87: Water treatment system
- 90: Controller

### Best Mode for Carrying Out the Invention

Embodiments of the present invention will be explained below with reference to the accompanying drawings.

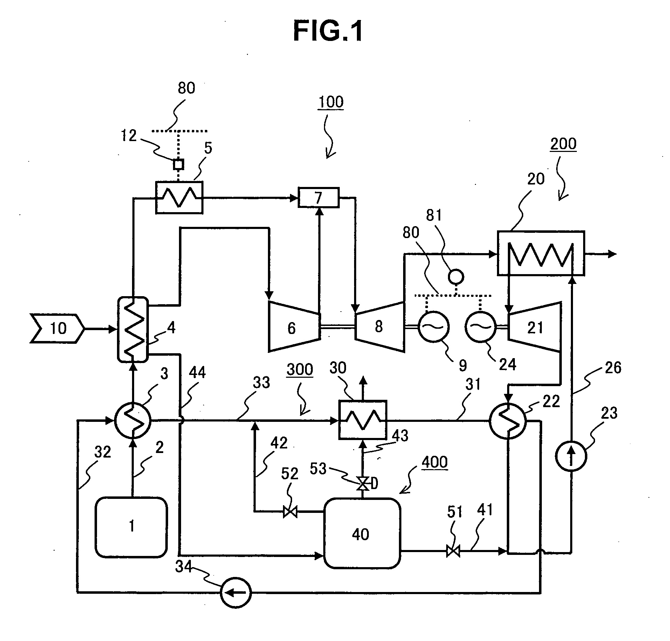

Fig. 1 is a schematic configuration diagram of power supply equipment for a natural gas liquefaction plant according to a first embodiment of the present invention.
The power supply equipment shown in Fig. 1 supplies electric power to the natural gas liquefaction plant which produces liquefied natural gas (LNG). The power supply equipment comprises a fuel tank 1, a gas turbine system 100, a steam turbine system 200, a steam-condenser cooling system 300, and a supply water system 400.

The fuel tank 1 stores LNG produced by the natural gas liquefaction plant and supplies the LNG to the gas turbine system 100. The fuel tank 1 is connected with the gas turbine system 100 through a fuel pipe 2.

The gas turbine system 100 includes the fuel pipe 2 which circulates LNG therethrough, a vaporizer 3 which performs heat exchange between the LNG in the fuel pipe 2 and steam condenser cooling water (first cooling water) to the heat LNG, a condenser 4 which performs heat exchange between the LNG from the vaporizer 3 and air to heat the LNG, a heater 5 which evaporates all the natural gas (including LNG in some cases) from the condenser 4, a compressor 6 which compresses the air cooled by the condenser 4, a combustor 7 which mixes the air compressed by the compressor 6 and the natural gas that has passed the heater 5 and combusts the air-gas mixture, and a gas turbine 8 which is driven by the combustion gas generated by the combustor 7.

The fuel pipe 2, a pipe through which is circulated the LNG from the fuel tank 1, passes through the vaporizer 3, the condenser 4, and the heater 5 and then connects to the combustor 7. The LNG in the fuel pipe 2 is heated in a phased manner while circulating in the vaporizer 3, the condenser 4, and the heater 5 so as to be completely evaporated before flowing into the combustor 7.

The vaporizer 3 which heats the LNG in the fuel pipe 2 is connected with the fuel tank 1 through the fuel pipe 2. The fuel pipe 2 and the cooling water (steam condenser cooling water) of the steam condenser 22 (to be mentioned later) of the steam turbine system 200 is led into the vaporizer 3. The vaporizer 3 performs heat exchange between the LNG in the fuel pipe 2 and the steam condenser cooling water to cool the steam condenser cooling water while heating the LNG. Since the vaporizer 3 according to the present embodiment uses a liquid (steam condenser cooling water) to heat the LNG, it is possible to make the vaporizer more compact in comparison with a case where the LNG is heated only with gas (for example, air). Further, since the vaporizer 3 uses the steam condenser cooling water to heat the LNG, the temperature difference between media subjected to heat exchange is small in comparison with a case where steam of the steam turbine is used as a LNG heating medium, thereby reducing thermal stress to be generated. Thus, low-price materials can be used for the vaporizer 3.

The condenser 4 which cools air 10 to condense moisture in the air is connected with the vaporizer 3 through the fuel pipe 2. The fuel pipe 2 and the air 10 are led into the condenser 4. The condenser 4 performs heat exchange between the LNG in the fuel pipe 2 and the air 10 to cool the air 10 and obtain condensed water from moisture in the air while heating the LNG. Since the amount of condensed water obtained by the condenser 4 depends on the moisture amount in the air, more water can be obtained in a season or an area with high air humidity. The air 10 cooled by the condenser 4 is led to the compressor 6, and condensed water obtained from the cooled air is led to a supply water tank 40 (to be mentioned later) of the supply water system 400.

The heater 5 which heats the LNG from the condenser 4 to completely evaporate it (to form natural gas) is connected with the condenser 4 through the fuel pipe 2. The heater 5 is connected with a power bus bar 80 (to be mentioned later) through an output controller 12 to heat the LNG by use of the electric power supplied from the power bus bar 80. The output controller 12 controls the output (heating quantity) of the heater 5. Even if the total volume of the LNG cannot be evaporated because of insufficient heating by the vaporizer 3 and the condenser 4, the heater 5 can heat the LNG high enough to evaporate it completely.

The compressor 6 which compresses the air cooled by the condenser 4 is connected with the air outlet of the condenser 4. Although the compressor 6 according to the present embodiment is connected with a rotating shaft of the gas turbine 8 (turbine rotor) and driven by the gas turbine 8, it may be possible to use electric power to drive the compressor 6.

The combustor 7 which mixes the air compressed by the compressor 6 and the natural gas that has passed the heater 5 and combusts the air-gas mixture is connected with the outlets of the heater 5 and the compressor 6. The natural gas and air combusted by the combustor 7 change to combustion gas which is led to the gas turbine 8.

The gas turbine 8, driven by the combustion gas generated by the combustor 7, is connected with a generator 9 through the rotating shaft. The combustion gas that drove the gas turbine 8 changes to exhaust gas which is led to a heat recovery steam generator 20 (to be mentioned later).

The generator 9, driven by the gas turbine 8 to generate electric power, supplies electric power to electrical equipment 81 connected through the power bus bar 80. The electrical equipment 81 operates on electric power. Although only the electrical equipment 81 is shown connected to power bus bar 80 of Fig. 1 to simplify the diagram, it goes without saying that a plurality of pieces of electrical equipment in the natural gas liquefaction plant and the power supply equipment are connected to the power bus bar 80. An example of the electrical equipment 81 in the natural gas liquefaction plant is a motor that gives driving force to equipment in the natural gas liquefaction plant.

Main equipment driven by the motor in the natural gas liquefaction plant is a refrigerant compressor (not shown). The refrigerant compressor is used to compress a refrigerant (propane gas, etc.) used when cooling mined natural gas. From a viewpoint of maintaining the quality and production efficiency of the LNG produced by the plant, it is desirable to operate the refrigerant compressor with a constant load, and it is demanded that the power required by the refrigerant compressor is constantly being supplied to the power supply equipment for the natural gas liquefaction plant.

Further, the power supply equipment according to the present embodiment is constituted so that the electrical equipment 81 can receive electric power supplied from a plurality of generators through the power bus bar 80. Therefore, even if some turbines may come to a halt or reduced output because of failure, maintenance, etc., the power loss can be compensated for by temporarily increasing the output power of the other turbines. Since electric power to be compensated for per turbine decreases with increasing number of turbines installed in the power supply equipment, it becomes easier to cope with the above-mentioned trouble.

The steam turbine system 200 includes the heat recovery steam generator 20 which generates steam by use of the exhaust gas of the gas turbine 8, a steam turbine 21 driven by the steam generated by the heat recovery steam generator 20, a steam condenser 22 which condenses the steam which drove the steam turbine 21, and a circulating pump 23 which circulates water, i.e., operating fluid of the steam turbine 21.

The heat recovery steam generator 20, which generates steam by use of the combustion gas (exhaust gas) that drove the gas turbine 8 as a heat source, is provided downstream of the gas turbine 8 along the exhaust gas circulating direction. The heat recovery steam generator 20 is connected with the outlet of the steam condenser 22 through a pipe 26 to receive the water (liquid water) condensed by the steam condenser 22. The heat recovery steam generator 20 performs heat exchange between the water supplied through the pipe 26 and the exhaust gas of the gas turbine 8 to generate steam.

The steam turbine 21 which is driven by the steam from the heat recovery steam generator 20 is connected with the generator 24 through a rotating shaft. The generator 24 which is driven by the steam turbine 21 to generate electric power is connected with the power bus bar 80 like the generator 9.

The steam condenser 22 which cools the steam that drove the steam turbine 21 by use of the steam condenser cooling water is connected with the steam outlet of the steam turbine 21. The steam condenser cooling water circulating in the steam-condenser cooling system 300 and the steam from the steam turbine 21 are led to the steam condenser 22.

The circulating pump 23 which supplies water condensed by the steam condenser 22 to the heat recovery steam generator is provided on the pipe 26 through which liquid water circulates.

The steam-condenser cooling system 300 includes a cooling tower 30 which cools the steam condenser cooling water, a pipe 31 which introduces the steam condenser cooling water cooled by the cooling tower 30 into the steam condenser 22, a pipe 32 which introduces the steam condenser cooling water heated by the steam in the steam condenser 22 into the vaporizer 3, a pipe 33 which introduces the steam condenser cooling water cooled by the vaporizer 3 into the cooling tower 30, and a circulating pump 34 which circulates the steam condenser cooling water in the steam-condenser cooling system 300. The steam-condenser cooling system 300 forms a closed loop with pipes 31, 32, and 33 to circulate the steam condenser cooling water for condensing the steam from the steam turbine 21 by use of the steam condenser 22 and heating the LNG from the fuel tank 1 by use of the vaporizer 3.

The cooling tower 30 which cools the steam condenser cooling water by use of cooling tower cooling water (second cooling water) is connected with the vaporizer 3 through the pipe 33. The steam condenser cooling water supplied through the pipe 33 and the cooling tower cooling water supplied from the supply water tank 40 (to be mentioned later) are led to the cooling tower 30. The cooling tower 30 sprays the cooling tower cooling water to the pipe through which the steam condenser cooling water circulates so as to indirectly cool the steam condenser cooling water and discharges evaporated cooling tower cooling water that completed heat exchange with the steam condenser cooling water into the atmosphere. The cooling quantity of the steam condenser cooling water in the cooling tower 30 is controlled by controlling the flow rate of water supplied from the supply water tank 40 by use of a flow-rate control valve 53 (to be mentioned later).

The circulating pump (first cooling-water circulating pump) 34 controls the circulation flow rate of the steam condenser cooling water in the steam-condenser cooling system 300. When the discharge flow rate of the circulating pump 34 is controlled, the flow rate of the steam condenser cooling water introduced into the vaporizer 3 is also controlled, resulting in control of the heating quantity applied to the LNG in the fuel pipe 2. Thereby, even if a flow rate of the LNG circulating in the fuel pipe 2 changes in response to the output power of the gas turbine 8, the LNG can be heated according to that changed flow rate. Further, if heating of the LNG in the vaporizer 3 is not sufficient, internal moisture may freeze by the LNG flowing into the condenser 4, which may result in blockage of a pipe 44. Therefore, it is necessary to control the discharge flow rate of the circulating pump 34 so that at least the amount of steam condenser cooling water necessary to avoid such a trouble is introduced into the vaporizer 3.

The supply water system 400 includes a supply water tank 40 which stores the condensed water obtained by the condenser 4, a water supply pipe 41 which supplies water (operating fluid) to the steam turbine system 200, a water supply pipe 42 which supplies condensed cooling water to the condensed-water cooling system 300, and a water supply pipe 43 which supplies cooling tower cooling water to the cooling tower 30.

The supply water tank 40 which stores the condensed water obtained from the air cooled by the condenser 4 is connected with the condenser 4 through the pipe 44.

The water supply pipe 41 is provided with an open/close valve 51. Also, it is connected to the pipe 26 which connects the steam condenser 22 and the heat recovery steam generator 20. The open/close valve 51 controls water supply to the steam turbine system 200. If the amount of operating fluid of the steam turbine system 200 decreases, the water in the supply water tank 40 is supplied as the operating fluid of the steam turbine system 200 by opening the open/close valve 51.

The water supply pipe 42 is provided with an open/close valve 52. Also, it is connected to the pipe 33 which connects the vaporizer 3 and the cooling tower 30. The open/close valve 52 controls water supply to the steam-condenser cooling system 300. If the steam condenser cooling water of the steam-condenser cooling system 300 decreases, the water in the supply water tank 40 is supplied as steam condenser cooling water of the steam-condenser cooling system 300 by opening the open/close valve 52.

The water supply pipe 43 is provided with a flow-rate control valve 53 and connected with the cooling tower 30. The flow-rate control valve 53 controls the amount of the cooling tower cooling water supplied to the cooling tower 30. When the opening of the flow-rate control valve 53 is controlled, the amount of the cooling tower cooling water sprayed in the cooling tower 30 is also controlled, resulting in control of the temperature of the steam condenser cooling water when it is discharged from the cooling tower 30.

With the thus-configured power supply equipment according to the present embodiment, the LNG stored in the fuel tank 1 is led to the vaporizer 3 through the fuel pipe 2. The LNG led to the vaporizer 3 is subjected to heat exchange with the steam condenser cooling water so as to be heated, and then led to the condenser 4. The LNG led to the condenser 4 is subjected to heat exchange with the air 10 taken in for compression by the compressor 6 so as to be heated further. The LNG heated by the condenser 4 is introduced into the heater 5 in a gas (natural gas) or gas-liquid mixture state according to the heating quantity that has been applied by that time. If the fuel led to the heater 5 is in the state of a gas-liquid mixture, it is completely evaporated after being heated by the heater 5 to form natural gas. The resultant fuel that has been gasified completely by the heater 5 is led to the combustor 7. Heating the fuel by the heater 5 prevents the LNG from flowing into the combustor 7 in a liquid state, thereby stabilizing the combustion state in the combustor 3.

While the fuel is led to the combustor 7 as mentioned above, the air 10 taken in by the condenser 4 is cooled by the LNG circulating in the fuel pipe 2 in the condenser 4. As a rule, the lower the temperature of inflow air into the compressor 6, the more the power generation efficiency of the gas turbine 8 improves. Therefore, if air is cooled by the condenser 4 in that manner, it is possible to improve the power generation efficiency in comparison with a case where air is directly taken in from the atmosphere to the compressor 6, thereby reducing the consumption of LNG (fuel). Thus, the air cooled in the condenser 4 is compressed by the compressor 6 and then led to the combustor 7 together with natural gas.

The natural gas led to the combustor 7 is mixed with air and combusted to form high-temperature high-pressure combustion gas. The thus-generated combustion gas is led to the gas turbine 8 to rotate the gas turbine 8. The gas turbine 8 rotated by the combustion gas transmits shaft driving force to the generator 9, and the generator 9 generates electric power. The electric power generated by the generator 9 is supplied to the electrical equipment 81 in the natural gas liquefaction plant through the power bus bar 80. Since the compressor 6 according to the present embodiment is directly connected with the gas turbine 8 through the rotating shaft, it is directly driven by the gas turbine 8 like the generator 9.

The combustion gas that rotated the gas turbine 8 is discharged toward the heat recovery steam generator 20. The heat recovery steam generator 20 heats the water supplied through the pipe 26 by use of the exhaust gas as a thermal source to generate steam. The steam generated by the heat recovery steam generator 20 is led to the steam turbine 21 to rotate the steam turbine 21. The steam turbine 21 rotated by steam transmits shaft driving force to the generator 24 and supplies electric power to the electrical equipment 81 through the power bus bar 80 like the gas turbine 8. The steam that rotated the steam turbine 21 is led to the steam condenser 22 and then cooled by the steam condenser cooling water so as to be condensed.

If the electrical equipment 81 in the natural gas liquefaction plant is configured so as to receive electric power supply from a plurality of generators as in the power supply equipment according to the present embodiment, even if some turbines which drive generators may come to a halt because of failure, maintenance, etc., the power loss can be compensated for by temporarily increasing the output power of the other turbines. This makes it possible to supply constant power to the natural gas liquefaction plant at any given time, thereby improving the plant operation efficiency and maintaining the LNG quality. Further, when the refrigerant compressor is to be driven by directly connecting it to the rotating shaft of the turbine, it is necessary to separately design pieces of power supply equipment each specialized based on specifications of each refrigerant compressor. However, if the refrigerant compressor is driven by a motor as in the present embodiment, specifications of each refrigerant compressor can be supported by changing the electric power to be supplied to the motor. This reduces the necessity to separately design pieces of power supply equipment according to plant requirements, thus improving the versatility of the power supply equipment. Further, since the output power of the gas turbine fluctuates with changes in atmospheric temperature, there arises a problem that a refrigerant compressor directly driven by the gas turbine is susceptible to effects of atmospheric temperature changes. However, if the refrigerant compressor is driven by a motor as in the present embodiment, it is possible to cope with the fluctuations of the gas turbine output by controlling the electric power to be supplied to the motor, making the refrigerant compressor less susceptible to the effects of atmospheric temperature changes.

Further, with the thus-configured power supply equipment according to the present embodiment, the steam condenser cooling water that condensed the steam from the steam turbine 21 in the steam condenser 22 is introduced into the vaporizer 3 by the circulating pump 34. It is necessary to control the circulating pump 34 so as to ensure a flow rate to at least prevent the freezing of moisture in the condenser 4. It is further preferable to control the circulating pump 34 based on the flow rate of the LNG circulating in the fuel pipe 2, which leads to increased efficiency.

The steam condenser cooling water led to the vaporizer 3 is cooled by LNG in the fuel pipe 2 and then led to the cooling tower 30 through the pipe 33. In accordance with the present embodiment, since the steam condenser cooling water introduced from the vaporizer 3 to the cooling tower 30 has already been cooled by LNG, the size of the cooling tower can be reduced in comparison with a system without the vaporizer 3. The steam condenser cooling water led into the cooling tower 30 is cooled by the cooling tower cooling water supplied from the water supply pipe 43. The flow-rate control valve 53 is used to control the temperature of the steam condenser cooling water according to the flow rate and temperature of the steam introduced into the steam condenser 22 from the steam turbine 21. If the flow rate of the cooling tower cooling water supplied to the cooling tower 30 is controlled by the flow-rate control valve 53, the temperature of the steam condenser cooling water can be controlled according to the flow rate and temperature of the steam introduced into the steam condenser 22 from the steam turbine 21. The steam-condenser cooling system 300 according to the present embodiment thus stably condenses the steam from the steam turbine 21 by use of the steam condenser 22 and at the same time heats LNG by use of the vaporizer 3 according to the amount of the LNG circulating in the fuel pipe 2.

Meanwhile, moisture in the air introduced into the condenser 4 is condensed by LNG and then stored in the supply water tank 40 as supply water through the pipe 44. If the operating fluid of the steam turbine system 200 decreases, opening the open/close valve 51 supplies the water in the supply water tank 40 to the steam turbine system 200 through the pipe 41. This makes it possible to avoid a situation where the flow rates of the operating fluid of the steam turbine 21 are insufficient, allowing stable operation of the steam turbine 21 even in an area where procurement of a massive amount of water for steam turbines is difficult.

Further, if the steam condenser cooling water of the steam-condenser cooling system 300 decreases, opening the open/close valve 52 supplies the water in the supply water tank 40 to the steam-condenser cooling system 300 through the pipe 42. This makes it possible to stably condense the steam by use of the steam condenser 22, allowing stable operation of the steam turbine 21 even in an area where procurement of water for steam turbines is difficult. Further, if the steam condenser cooling water can be suitably supplied as an as-needed basis as mentioned above, it is possible to stably heat LNG by the vaporizer 3. This makes it possible to avoid a situation where LNG freezes moisture in the condenser 4, allowing moisture in the air to be continuously collected.

Effects of the present embodiment will be explained below.

In comparison with gas turbine equipment generally used as a power source of a natural gas liquefaction plant, the so-called combined-cycle power generation equipment is superior in thermal efficiency and capable of efficient production of liquefied natural gas. However, in order to configure combined-cycle power generation equipment, a massive amount of water is required for use as the operating fluid of steam turbines and as cooling water for condensing the steam that rotated the steam turbines. Therefore, the introduction of the combined-cycle power generation equipment is difficult in areas where procurement of a massive amount of industrial water is difficult (for example, a midland, an arid region). Some of natural-gas-producing areas do not satisfy this condition. In some of such natural-gas-producing areas where combined-cycle power generation is disadvantageous in terms of price competition in comparison with areas where the combined-cycle power generation can be used, plant construction was reportedly postponed.

In contrast, the power supply equipment according to the present embodiment includes the vaporizer 3 which heats LNG by use of steam condenser cooling water, the condenser 4 which heats the LNG from the vaporizer 3 by use of air, the supply water tank 40 which stores the condensed water obtained by the condenser 4, the water supply pipe 41 which supplies the water in the supply water tank 40 to the steam turbine system 200, and the water supply pipe 42 which supplies the water in the supply water tank 40 to the steam-condenser cooling system 300. In accordance with the thus-configured power supply equipment, it is possible to collect moisture in the air by use of LNG through the condenser 4, store the resultant water in the supply water tank 40, and suitably supply the stored water to the steam turbine system 200 and the steam-condenser cooling system 300. Thus, in accordance with the present embodiment, it is possible to obtain water necessary to operate the combined-cycle power generation equipment by operating the equipment, eliminating the need to supply water from outside. Therefore, in accordance with the present embodiment, it is possible to configure combined-cycle power generation equipment even in an area where procurement of water is difficult, allowing efficient production of liquefied natural gas.

Further, the power supply equipment according to the present embodiment includes the circulating pump 34 which controls the heating quantity applied to the LNG in the vaporizer 3 and also includes the flow-rate control valve 53 which controls the cooling quantity of the steam condenser cooling water in the cooling tower 30. This makes it possible to heat LNG according to the amount of the LNG circulating in the vaporizer 3 and at the same time cool the steam according to the flow rate and temperature of the steam circulating in the steam condenser 22. Therefore, it is possible to separately control the heating quantity in the vaporizer 3 and the cooling quantity in the steam condenser 22 in response to the output states of the gas turbine 8 and the steam turbine 21, thereby allowing efficient operation of the steam-condenser cooling system 300. In particular, since the power supply equipment according to the present embodiment is demanded to supply constant power to a natural gas liquefaction plant at any given time, it is necessary to generate constant electric power as a whole by separately controlling the output power of each turbine even if the output power of some turbines decreases, or some of them halt. Therefore, the above-mentioned feature that the heating quantity of the vaporizer 3 and the cooling quantity of the steam condenser 22 can be separately controlled in response to the output states of each turbine become more remarkably effective. Further, since the amount of the cooling tower cooling water supplied to the cooling tower 30 can be controlled, the water in the supply water tank 40 can be used efficiently.

Further, the present embodiment includes the vaporizer 3 and the condenser 4 as LNG evaporation equipment to evaporate LNG by use of steam condenser cooling water and air. This makes it possible to evaporate LNG by use of a medium commonly used in combined-cycle power generation equipment unlike the technique which uses a special heating medium (for example, propane gas) for LNG evaporation equipment (refer to Patent Document 1). Therefore, it is possible to configure power supply equipment in a simplified manner, thereby reducing equipment construction costs and failure factor occurrences. Further, the present embodiment makes it possible to avoid using sea water as a heating medium for evaporation equipment, allowing the prevention of environmental problems due to cold drainage as well as the configuration of combined-cycle power generation equipment even in an area where procurement of water is difficult.

A second embodiment of the present invention will now be explained below.

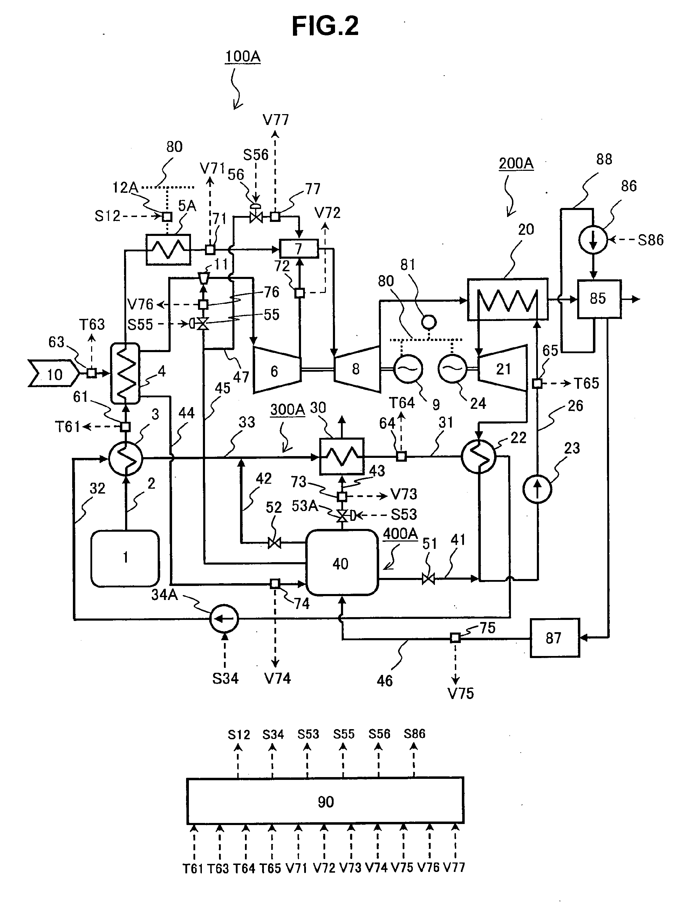

Fig. 2 is a schematic configuration diagram of the power supply equipment for a natural gas liquefaction plant according to the second embodiment of the present invention. The same components as in the previous diagram are assigned the same reference numerals, and duplicate explanations will be omitted.

The power supply equipment shown in Fig. 2 includes a gas turbine system 100A, a steam turbine system 200A, a steam-condenser cooling system 300A, a supply water system 400A, and a controller 90.

The gas turbine system 100A includes a fuel-temperature measuring apparatus 61, a two-phase flow-rate measuring apparatus 71, an air-temperature measuring apparatus 63, an atomizer 11, a compressed-air flow-rate measuring apparatus 72, and a heater 5A.

The fuel-temperature measuring apparatus 61, which measures the temperature of the LNG flowing into the condenser 4 from the vaporizer 3, is attached to the fuel pipe 2 so as to be positioned between the vaporizer 3 and the condenser 4. The fuel-temperature measuring apparatus 61 is connected with the controller 90 to transmit a measured temperature T61 thereto.

The two-phase flow-rate measuring apparatus 71, which measures the liquid- and vapor-phase flow rates of the LNG flowing into the combustor 7 from the heater 5A, is attached to the fuel pipe 2 so as to be positioned between the heater 5A and the combustor 7. The two-phase flow-rate measuring apparatus 71 is connected with the controller 90 to transmit the liquid-phase flow rate of LNG (as a measured flow rate V711) and the vapor-phase (natural gas) flow rate of LNG (as a measured flow rate V71g) to the controller 90. Although the present embodiment uses the two-phase flow-rate measuring apparatus 71 that can simultaneously measure the liquid- and vapor-phase flow rates, it may be possible to separately measure the vapor- and liquid-phase flow rates.

The air-temperature measuring apparatus 63 which measures the temperature of air flowing into the condenser 4 is provided upstream from the condenser 4 along the air circulating direction. The air-temperature measuring apparatus 63 is connected with the controller 90 to transmit a measured temperature T63 thereto.

The atomizer 11 which sprays water to the air cooled by the condenser 4 is provided between the condenser 4 and the compressor 6. The atomizer 11 is connected with the supply water tank 40 through a water supply pipe 45 (to be mentioned later) to spray the water in the supply water tank 40 to air. The amount of water sprayed by the atomizer 11 is controlled by a flow-rate control valve 55 (to be mentioned later).

The compressed-air flow-rate measuring apparatus 72 which measures the flow rate of the compressed air flowing into the combustor 7 from the compressor 6 is provided between the compressor 6 and the combustor 7. The compressed-air flow-rate measuring apparatus 72 is connected with the controller 90 to transmit a measured flow rate V72 thereto.

An output controller 12A of the heater 5A is connected with the controller 90 to receive a control signal S12 therefrom. The control signal S12 is used to control the output controller 12A so that the output power of the heater 5A approaches a target output power Wa determined by the controller 90 based on a liquid-phase flow rate (the measured flow rate V711) of the liquefied natural gas to be measured by the two-phase flow-rate measuring apparatus 71. When the output controller 12A receives the control signal S12, it controls the heater 5A so that the output power thereof approaches the target output power Wa.

The steam turbine system 200A includes a condensed-water-temperature measuring apparatus 65. The condensed-water-temperature measuring apparatus 65 measures the temperature of the liquid water supplied from the steam condenser 22 to the heat recovery steam generator 20 and is attached to the pipe 26 so as to be positioned between the steam condenser 22 and the heat recovery steam generator 20. The condensed-water-temperature measuring apparatus 65 is connected with the controller 90 to transmit a measured temperature T65 thereto.

The steam-condenser cooling system 300A includes a steam-condenser-cooling-water-temperature measuring apparatus 64 which measures the temperature of the steam condenser cooling water flowing into the steam condenser 22 from the cooling tower 30 and also includes a circulating pump 34A.

The steam-condenser-cooling-water-temperature measuring apparatus 64, which measures the temperature of the steam condenser cooling water flowing into the steam condenser 22 from the cooling tower 30, is attached to the pipe 31 so as to be positioned between the cooling tower 30 and the steam condenser 22. The steam-condenser-cooling-water-temperature measuring apparatus 64 is connected with the controller 90 to transmit a measured temperature T64 thereto.

The circulating pump 34A is connected with the controller 90 to receive a control signal S34 therefrom. The control signal S34 is used to control the discharge flow rate of the circulating pump 34A so that the temperature T61 measured by the fuel-temperature measuring apparatus 61 approaches a target temperature Ta determined by the controller 90 to prevent freezing of moisture in the air in the condenser 4. When the circulating pump 34A receives the control signal S34, it controls the discharge flow rate so that the temperature T61 measured by the fuel-temperature measuring apparatus 61 approaches the target temperature Ta.

The supply water system 400A includes a cooling-tower-cooling-water-flow-rate measuring apparatus 73, a flow-rate control valve 53A, a condensed-water-flow-rate measuring apparatus 74, the water supply pipe 45, a water supply pipe 47, a water recovery system 85, a water supply pipe 46, and a water treatment system 87.

The cooling-tower-cooling-water-flow-rate measuring apparatus 73, which measures the amount of the cooling-tower cooling water supplied from the supply water tank 40 through the water supply pipe 43 to the cooling tower 30, is attached to the water supply pipe 43 so as to be positioned between the cooling tower 30 and the flow-rate control valve 53A. The cooling-tower-cooling-water-flow-rate measuring apparatus 73 is connected with the controller 90 to transmit a measured flow rate V73 thereto.

The flow-rate control valve 53A is connected with the controller 90 to receive a control signal S53 therefrom. The control signal S53 is used to control the flow-rate control valve 53A based on the flow rate V73 measured by the cooling-tower-cooling-water-flow-rate measuring apparatus 73 so that the temperature T64 measured by the steam-condenser-cooling-water-temperature measuring apparatus 64 approaches a target temperature Tb determined by the controller 90 based on the temperature T65 measured by the condensed-water-temperature measuring apparatus 65. When the flow-rate control valve 53A receives the control signal S53, it controls the flow rate of cooling-tower cooling water so that the temperature T64 measured by the steam-condenser-cooling-water-temperature measuring apparatus 64 approaches the target temperature Tb.

The condensed-water-flow-rate measuring apparatus 74 which measures the flow rate of the condensed water supplied from the condenser 4 to the supply water tank 40 is attached to the pipe 44. The condensed-water-flow-rate measuring apparatus 74 is connected with the controller 90 to transmit a measured flow rate V74 thereto.

The water supply pipe 45 connects the supply water tank 40 and the atomizer 11 to supply the water of the supply water tank 40 to the atomizer 11. The water supply pipe 45 includes a water-spray-flow-rate measuring apparatus 76 (first water-spray-flow-rate measuring apparatus) and the flow-rate control valve 55 (first water-spray-flow-rate control valve).

The water-spray-flow-rate measuring apparatus 76, which measures the amount of water supplied to the atomizer 11, is attached to the water supply pipe 45 so as to be positioned between the atomizer 11 and the flow-rate control valve 55. The water-spray-flow-rate measuring apparatus 76 is connected with the controller 90 to transmit a measured flow rate V76 thereto.

The flow-rate control valve 55, which controls the amount of water supplied to the atomizer 11, is attached to the water supply pipe 45 so as to be positioned between the water-spray-flow-rate measuring apparatus 76 and the supply water tank 40. The flow-rate control valve 55 is connected with the controller 90 to receive a control signal S55 therefrom. The control signal S55 is used to control the flow-rate control valve 55 so that the water flow rate V76 measured by the water-spray-flow-rate measuring apparatus 76 approaches a target flow rate Va determined based on the temperature T63 measured by the air-temperature measuring apparatus 63. When the flow-rate control valve 55 receives the control signal S55, it controls the amount of water supplied to the atomizer 11 so that the water flow rate V76 measured by the water-spray-flow-rate measuring apparatus 76 approaches the target flow rate Va.

The water supply pipe 47 connects the supply water tank 40 and the combustor 7 to supply the water of the supply water tank 40 to the combustor 7 (in the form of spray). Although the water supply pipe 47 according to the present embodiment is connected to the water supply pipe 45 upstream from the flow-rate control valve 55, it may be possible to directly connect the supply water tank 40 and the combustor 7. The water supply pipe 47 includes a water-spray-flow-rate measuring apparatus 77 (second water-spray-flow-rate measuring apparatus) and a flow-rate control valve 56 (second water-spray-flow-rate control valve).

The water-spray-flow-rate measuring apparatus 77, which measures the amount of water supplied to the combustor 7, is attached to the water supply pipe 47 so as to be positioned between the combustor 7 and the flow-rate control valve 56. The water-spray-flow-rate measuring apparatus 77 is connected with the controller 90 to transmit a measured flow rate V77 thereto.

The flow-rate control valve 56, which controls the amount of water supplied to the combustor 7, is attached to the water supply pipe 47 so as to be positioned between the water-spray-flow-rate measuring apparatus 77 and the supply water tank 40. The flow-rate control valve 56 is connected with the controller 90 to receive a control signal S56 therefrom. The control signal S56 is used to control the flow-rate control valve 56 so that the water flow rate V77 measured by the water-spray-flow-rate measuring apparatus 77 approaches a target flow rate Vb determined based on the flow rate V72 measured by the compressed-air flow-rate measuring apparatus 72 and the vapor-phase flow rate V71g measured by the two-phase flow-rate measuring apparatus 71. When the flow-rate control valve 56 receives the control signal S56, it controls the amount of water supplied to the combustor 7 so that the water flow rate V77 measured by the water-spray-flow-rate measuring apparatus 77 approaches the target flow rate Vb.

The water recovery system 85, which contacts the exhaust gas from the heat recovery steam generator 20 with water-recovery circulating water (third cooling water) for cooling to collect moisture in the exhaust gas, is provided downstream from the heat recovery steam generator 20 along the exhaust gas flow direction. The water recovery system 85 includes a pipe 88 for circulating the water-recovery circulating water therethrough and a circulating pump 86 which controls the circulation flow rate of the water-recovery circulating water in the pipe 88.

The water supply pipe 46 is connected from the water recovery system 85 to the supply water tank 40 to supply the water recovered from the exhaust gas by the water recovery system 85 to the supply water tank 40.

The water treatment system 87 which eliminates corrosive substances, nitrogen oxides, etc. from the water recovered by the water recovery system 85 is provided between the water recovery system 85 and the supply water tank 40.

A recovered-water-flow-rate measuring apparatus 75, which measures the flow rate of the recovered water supplied from the water treatment system 87 to the supply water tank 40, is attached to the pipe 46 so as to be positioned between the supply water tank 40 and the water treatment system 87. The recovered-water-flow-rate measuring apparatus 75 is connected with the controller 90 to transmit a measured flow rate V75 thereto.

The circulating pump 86 (third cooling-water circulating pump) that can change its discharge flow rate is attached to the pipe 88. When the discharge flow rate of the circulating pump 86 is controlled, the circulation flow rate of the water-recovery circulating water introduced into the water recovery system 85 is also controlled, resulting in control of the amount of water recovered from the exhaust gas. The circulating pump 86 is connected with the controller 90 to receive a control signal S86 therefrom. The control signal S86 is used to control the discharge amount of the circulating pump 86 so that the flow rate V75 measured by the recovered -water-flow-rate measuring apparatus 75 approaches a target flow rate Vc determined by the controller 90 based on the flow rate V74 measured by the condensed-water-flow-rate measuring apparatus 74, the flow rate V73 measured by the cooling-tower-cooling-water-flow-rate measuring apparatus 73, the flow rate V76 measured by the water-spray-flow-rate measuring apparatus 76, and the flow rate V77 measured by the water-spray-flow-rate measuring apparatus 77 so as to make constant the differences between inflow and outflow of water to be used by the supply water system 400A. When the circulating pump 86 receives the control signal S86, it controls its discharge amount so that the flow rate V75 measured by the recovered collected-water-flow-rate measuring apparatus 75 approaches the target flow rate Vc.

As mentioned above, the controller 90 receives a measured value from each measuring apparatus in the power supply equipment, sets target values (the target output power Wa, the target temperature Ta, the target temperature Tb, the target flow rate Va, the target flow rate Vb, and the target flow rate Vc) based on the measured values, and controls the output controller 12A, the flow-rate control valves 53A, 55, and 56, and the circulating pumps 34A and 86 so that the measured values from each measuring apparatus approach the respective target values.

The target output power Wa, target output power for the heater 5A, is set to prevent the LNG from the fuel tank 1 from flowing into the combustor 7 as it is, i.e, in a liquid state. The target output power Wa is determined based on the liquid-phase flow rate of the LNG which is going to flow into the combustor 7. In accordance with the present embodiment, it is set by use of the flow rate V711 measured by the two-phase flow-rate measuring apparatus 71. The controller 90 controls the output controller 12A so that the output power of the heater 5A approaches the target output power.

The target temperature Ta, a target temperature of LNG, is set to prevent the LNG passing the condenser 4 from freezing moisture in the air therein. The controller 90 according to the present embodiment controls the flow rate of the steam-condenser cooling water introduced into the vaporizer 3 by controlling the discharge flow rate of the circulating pump 34A, thereby indirectly controlling the temperature of the LNG upon its flow into the condenser 4.

The target temperature Tb, a target temperature of the steam-condenser cooling water, is set to supply to the steam condenser 22 steam-condenser cooling water with a temperature suitable for the output power of the steam turbine 21. It is determined based on the temperature of the operating fluid (temperature of the liquid water) of the steam turbine 21 which operating fluid has been condensed by the steam condenser 22. The controller 90 according to the present embodiment is controlled so that the temperature of the steam-condenser cooling water approaches the target temperature Tb by controlling the amount of the cooling-tower cooling water supplied to the cooling tower 30 by use of the flow-rate control valve 53A.

The target flow rate Va, a target value of the amount of water sprayed to the air to be compressed by the compressor 6, is set to add a certain amount of water suitable for the state of that air. The target flow rate Va is determined based on the temperature of the air flowing into the condenser 4. The controller 90 controls the water spray flow rate by use of the flow-rate control valve 55 so that the amount of water supplied to the air by the atomizer 11 approaches the target flow rate Va.

The target flow rate Vb, a target value of the water spray flow rate to the combustor 7, is set to supply to the combustor 7 a certain amount of water suitable for the flow rate of the fuel and the compressed air. The target flow rate Vb is determined based on the flow rate of the compressed air and fuel (natural gas) flowing into the combustor 7. The controller 90 controls the water spray flow rate by use of the flow-rate control valve 56 so that the amount of water supplied to the combustor 7 approaches the target flow rate Vb.

The target flow rate Vc, a target flow rate of the water supplied from the water recovery system 85 to the supply water tank 40, is set to make constant the differences between inflow and outflow of water to be used by the supply water system 400A. -The target flow rate Vc is determined so that the total amount of water supplied to the supply water system 400A, (V74+Vc(V75)), equals the total amount of water supplied to other systems, (V73+V76+V77). It is obtained by subtracting "the amount of water supplied from the condenser 4 (V74) " from "the total amount of water supplied to other systems (V73+V76+V77)." The present embodiment uses the measured flow rates V73, V76, and V77 to set the target flow rate Vc because water is supplied to the cooling tower 30, the atomizer 11, and the combustor 7. However, if water is not supplied to the atomizer 11 or the combustor 7, the total amount of water used excludes amounts of water for those. In contrast, when water is also supplied to other equipment, it goes without saying that the amount of water supplied to the other equipment is included to determine the target flow rate Vc. An example of the latter case may be that the above-mentioned total amount of water used is obtained by monitoring the amount of water supplied to the steam turbine system 200 and the steam-condenser cooling system 300 through the pipes 41 and 42 to set the target flow rate Vc.

Effects of the present embodiment will be explained below.

In the thus-configured power supply equipment according to the present embodiment, the fuel-temperature measuring apparatus 61 measures the temperature of the LNG flowing into the condenser 4 from the vaporizer 3 and transmits the measured temperature T61 to the controller 90. When the controller 90 receives the measured temperature T61, it transmits the control signal S34 to the circulating pump 34A so that the measured temperature T61 approaches the target temperature Ta. When the circulating pump 34A receives the control signal S34, it is controlled to a given discharge flow rate, and the flow rate of the steam-condenser cooling water circulating in the steam-condenser cooling system 300A is controlled according to the measured temperature T61. Then, the temperature of the LNG flowing into the condenser 4 approaches the target temperature Ta. Accordingly, it is possible to prevent a trouble where moisture in the air in the condenser 4 freezes by the LNG. Thus, in accordance with the present embodiment, it is possible to control the discharge flow rate of the circulating pump 34A while monitoring the temperature of the LNG flowing into the condenser 4, allowing flexibility in coping with LNG temperature changes. Further, since the discharge flow rate of the circulating pump 34A can be controlled according to LNG temperatures, necessary power for the equipment can be reduced.

Further, in accordance with the above-mentioned embodiment, the two-phase flow-rate measuring apparatus 71 measures a liquid-phase flow rate of the LNG that has passed the heater 5A and transmits the measured flow rate V711 to the controller 90. When the controller 90 receives the measured flow rate V711, it transmits the control signal S12 to the output controller 12A so that the measured flow rate V711 becomes zero, that is, the liquid-phase flow rate is zeroed. When the output controller 12A receives the control signal S12, it controls the output power of the heater 5A so that it approaches the target output power Wa. This makes it possible to gasify into natural gas the total volume of the LNG flowing into the combustor 7. Thus, in accordance with the present embodiment, it is possible to unfailingly gasify the total volume of the LNG before introducing it into the combustor 7 even with insufficient heating quantity in the vaporizer 3 and the condenser 4, thereby constantly stabilizing the combustion state in the combustor 7. When determining the target output power Wa in further detail, it is preferable to provide a fuel-temperature measuring apparatus between the two-phase flow-rate measuring apparatus 71 and the combustor 7 so as to transmit a measured temperature to the controller 90. This makes it possible to determine the target output power Wa based on the temperature of the natural gas upon its flow into the combustor 7, allowing the heating quantity in the heater 5A to be restrained to a minimum.

In accordance with the thus-configured embodiment, the air-temperature measuring apparatus 63 measures the temperature of the air flowing into the condenser 4 and transmits the measured temperature T63 to the controller 90. When the controller 90 receives the measured temperature T63, it transmits the control signal S55 to the flow-rate control valve 55 so that the water flow rate V76 measured by the water-spray-flow-rate measuring apparatus 76 approaches the target flow rate Va. When the flow-rate control valve 55 receives the control signal S55, it is controlled to a given opening degree, and the atomizer 11 sprays a certain amount of water suitable for the air inflow temperature (measured temperature T63). Thus, when the air that has passed the atomizer 11 is introduced into the compressor 6, moisture added by the atomizer 11 evaporates in the compressor 6, removing the evaporation heat from the surround to lower the air temperature. Thereby, the load on the compressor 6 can be reduced.

Further, in accordance with the above-mentioned embodiment, the compressed-air measuring apparatus 72 measures a flow rate of the compressed air flowing into the combustor 7 and transmits the measured flow rate V72 to the controller 90. On the other hand, the two-phase flow-rate measuring apparatus 71 measures a vapor-phase flow rate of the fuel flowing into the combustor 7 and transmits the measured flow rate V71g to the controller 90. When the controller 90 receives the measured flow rates V72 and V71g, it transmits the control signal S56 to the flow-rate control valve 56 so that the water flow rate V77 measured by the water-spray-flow-rate measuring apparatus 77 approaches the target flow rate Vb. When the flow-rate control valve 56 receives the control signal S56, it is controlled to a given opening degree, and a certain amount of water suitable for the flow rates (V72 and V71g) of the fuel and compressed air introduced into the combustor 7 is sprayed into the combustor 7. Thus, when water is sprayed into the combustor 7, the combustion temperature of high-temperature sections falls, thereby reducing an amount of nitrogen oxides, etc., in the combustion gas.

Further, with the above-mentioned power supply equipment, the condensed-water-temperature measuring apparatus 65 measures a temperature of the liquid water supplied from the steam condenser 22 to the heat recovery steam generator 20 and transmits the measured temperature T65 to the controller 90. When the controller 90 receives the measured temperature T65, it transmits the control signal S53 to the flow-rate control valve 53A so that the temperature T64 measured by the steam-condenser-cooling-water-temperature measuring apparatus 64 approaches the target temperature Tb. When the flow-rate control valve 53A receives the control signal S53, it is controlled to a given opening degree to control the flow rate of the cooling-tower cooling water supplied to the cooling tower 30. This makes it possible to bring the temperature of the steam-condenser cooling water flowing into the steam condenser 22 closer to the target temperature Tb. Therefore, the steam-condenser cooling water at a temperature suitable for the output power of the steam turbine 21 is supplied to the steam condenser 22. This makes it possible to stably condense the steam by use of the steam condenser 22 even if the output power of the steam turbine 21 changes.

Further, the condensed-water-flow-rate measuring apparatus 74 in the above-mentioned power supply equipment measures a flow rate of the condensed water supplied from the condenser 4 to the supply water tank 40 and transmits the measured flow rate V74 to the controller 90. Further, as mentioned above, the measured flow rate V73, the measured flow rate V76, and the measured flow rate V77 are transmitted from the cooling-tower-cooling-water-flow-rate measuring apparatus 73, the water-spray- flow-rate measuring apparatus 76, and the water-spray-flow-rate measuring apparatus 77 to the controller 90. When the controller 90 receives these measured flow rates, it transmits the control signal S86 to the circulating pump 86 so that the flow rate V75 measured by the recovered-water-flow-rate measuring apparatus 75 approaches the target flow rate Vc. When the circulating pump 86 receives the control signal S86, it is controlled to a given discharge flow rate, and the amount of water supplied from the water recovery system 85 to the supply water tank 40 (the measured flow rate V75) approaches the target flow rate Vc. This makes it possible to continuously obtain the same amount of water as that supplied by the supply water system 400A to other systems, allowing combined-cycle power generation equipment to be configured without supplying necessary water from outside. Further, the load on the circulating pump 86 can be changed according to water flow rate demanded, thereby improving its efficiency.

## Claims

1. Power supply equipment for a natural gas liquefaction plant which supplies power to the natural gas liquefaction plant for producing liquefied natural gas, the power supply equipment comprising:
a gas turbine system which includes a fuel pipe which circulates liquefied natural gas therethrough, a vaporizer which performs heat exchange between the liquefied natural gas in the fuel pipe and first cooling water to heat the liquefied natural gas, a condenser which performs heat exchange between the liquefied natural gas from the vaporizer and air to evaporate the liquefied natural gas, a compressor which compresses the air cooled by the liquefied natural gas in the condenser, a combustor which mixes the air compressed by the compressor and the natural gas that has passed the condenser and combusts the resultant air-gas mixture, and a gas turbine which is driven by the combustion gas generated by the combustor;
a steam turbine system which includes a heat recovery steam generator which generates steam by use of the exhaust gas of the gas turbine, a steam turbine which is driven by the steam generated by the heat recovery steam generator, and a steam condenser which condenses by use of the first cooling water the steam that drove the steam turbine;
a steam-condenser cooling system which includes a cooling tower for cooling by use of second cooling water the first cooling water cooled by liquefied natural gas in the vaporizer and supplies the first cooling water cooled by the cooling tower to the steam condenser; and
a supply water system which includes a supply water tank which stores the condensed water obtained from the air cooled by the condenser, a first water supply pipe which supplies the water of the supply water tank to the steam turbine system, and a second water supply pipe which supplies the water of the supply water tank to the steam-condenser cooling system.

2. Power supply equipment for a natural gas liquefaction plant according to Claim 1, wherein:
the power supply equipment includes a first-cooling-water circulating pump which controls the circulation flow rate of the first cooling water.

3. Power supply equipment for a natural gas liquefaction plant according to Claim 1, wherein:
the power supply equipment includes:
a third water supply pipe which supplies the water of the supply water tank to the cooling tower as the second cooling water; and
second-cooling-water-flow-rate control means for controlling the amount of the second cooling water supplied to the cooling tower through the third water supply pipe.

4. Power supply equipment for a natural gas liquefaction plant according to Claim 1, wherein:
the power supply equipment includes:
a water recovery system which cools the exhaust gas of the heat recovery steam generator to recover water;
a third-cooling-water circulating pump which controls the circulation flow rate of third cooling water that cools the exhaust gas by use of the water recovery system;
a water treatment system which processes the water from the water recovery system; and
a fourth water supply pipe which supplies the water from the water treatment system to the supply water tank.

5. Power supply equipment for a natural gas liquefaction plant which supplies power to the natural gas liquefaction plant for producing liquefied natural gas, the power supply equipment comprising:
a gas turbine system which includes a fuel pipe which circulates liquefied natural gas therethrough, a vaporizer which performs heat exchange between the liquefied natural gas in the fuel pipe and first cooling water to heat the liquefied natural gas, a condenser which performs heat exchange between the liquefied natural gas from the vaporizer and air to evaporate the liquefied natural gas, a compressor which compresses the air cooled by the liquefied natural gas in the condenser, a combustor which mixes the air compressed by the compressor and the natural gas that has passed the condenser and combusts the resultant air-gas mixture, and a gas turbine which is driven by the combustion gas generated by the combustor;
a steam turbine system which includes a heat recovery steam generator which generates steam by use of the exhaust gas of the gas turbine, a steam turbine which is driven by the steam generated by the heat recovery steam generator, and a steam condenser which condenses by use of the first cooling water the steam that drove the steam turbine;
a steam-condenser cooling system which includes a cooling tower for cooling by use of second cooling water the first cooling water cooled by liquefied natural gas in the vaporizer and a first-cooling-water circulating pump which controls the circulating flow rate of the first cooling water and supplies the first cooling water cooled by the cooling tower to the steam condenser; and
a supply water system which includes a supply water tank which stores the condensed water obtained from the air cooled by the condenser, a first water supply pipe which supplies the water of the supply water tank to the steam turbine system, a second water supply pipe which supplies the water of the supply water tank to the steam-condenser cooling system, a third water supply pipe which supplies the water of the supply water tank to the cooling tower as the second cooling water, and second-cooling-water-flow-rate control means for controlling the amount of the second cooling water supplied to the cooling tower through the third water supply pipe.

6. Power supply equipment for a natural gas liquefaction plant according to Claim 2, wherein:
the power supply equipment includes:
fuel-temperature measurement means for measuring a temperature of the liquefied natural gas flowing into the condenser from the vaporizer; and
a controller which controls the discharge flow rate of the first cooling-water circulating pump so that the temperature measured by the fuel-temperature measurement means approaches a target temperature determined so as to prevent the freezing of moisture in the air in the condenser.

7. Power supply equipment for a natural gas liquefaction plant according to Claim 3, wherein:
the power supply equipment includes:
second-cooling-water-flow-rate measurement means for measuring an amount of the second cooling water supplied to the cooling tower through the third water supply pipe;
first-cooling-water-temperature measurement means for measuring a temperature of the first cooling water flowing into the steam condenser from the cooling tower;
condensed-water-temperature measurement means for measuring the temperature of the liquid water supplied from the steam condenser to the heat recovery steam generator; and
a controller which controls the second-cooling-water-flow-rate control means based on a value measured by the second-cooling-water-flow-rate measurement means so that the temperature measured by the first-cooling-water-temperature measurement means approaches a target temperature determined based on the temperature measured by the condensed-water-temperature measurement means.

8. Power supply equipment for a natural gas liquefaction plant according to Claim 7, wherein:
the power supply equipment includes:
a water recovery system which cools the exhaust gas of the heat recovery steam generator to recover water;
a third cooling-water circulating pump which controls a circulation flow rate of third cooling water which cools the exhaust gas by use of the water recovery system;
a water treatment system which processes the water from the water recovery system;
a fourth water supply pipe which supplies the water from the water treatment system to the supply water tank;
recovered-water-flow-rate measurement means for measuring a flow rate of the recovered water supplied to the supply water tank through the fourth water supply pipe; and
condensed-water-flow-rate measurement means for measuring a flow rate of the condensed water supplied from the condenser to the supply water tank; and
wherein the controller controls the discharge amount of the third-cooling-water circulating pump so that the flow rate measured by the recovered-water-flow-rate measurement means approaches a target flow rate determined based on the flow rates measured by the condensed-water-flow-rate measurement means and the second-cooling-water-flow-rate measurement means so as to make constant the differences between inflow and outflow of the water to be used by the supply water system.

9. Power supply equipment for a natural gas liquefaction plant according to Claim 1, wherein:
the power supply equipment includes:
a heater which heats the liquefied natural gas from the condenser;
two-phase flow-rate measurement means provided between the heater and the combustor to measure liquid-phase and vapor-phase flow rates of the liquefied natural gas from the heater; and
a controller which controls the output power of the heater based on the liquid-phase flow rate of the liquefied natural gas measured by the two-phase flow-rate measurement means.

10. Power supply equipment for a natural gas liquefaction plant according to Claim 1, wherein:
the power supply equipment includes:
an atomizer which sprays water to the air cooled by the condenser; and
a fifth water supply pipe which supplies the water of the supply water tank to the atomizer.

11. Power supply equipment for a natural gas liquefaction plant according to Claim 10, wherein:
the power supply equipment includes:
air-temperature measurement means for measuring a temperature of the air flowing into the condenser;
first water-spray-flow-rate measurement means for measuring an amount of the water supplied to the atomizer;
first water-spray-flow-rate control means for controlling an amount of the water supplied to the atomizer; and
a controller which controls the first water-spray-flow-rate control means so that the water flow rate measured by the first water-spray-flow-rate measurement means approaches a target flow rate determined based on the temperature measured by the air-temperature measurement means.

12. Power supply equipment for a natural gas liquefaction plant according to Claim 1, wherein:
the power supply equipment includes a sixth water supply pipe which supplies the water of the supply water tank to the combustor.

13. Power supply equipment for a natural gas liquefaction plant according to Claim 12, wherein:
the power supply equipment includes:
compressed-air flow-rate measurement means for measuring a flow rate of the compressed air flowing into the combustor;
fuel-flow-rate measurement means for measuring a flow rate of the natural gas flowing into the combustor;
second water-spray-flow-rate measurement means for measuring an amount of the water supplied to the combustor;
second water-spray-flow-rate control means for controlling an amount of the water supplied to the combustor; and
a controller which controls the second water-spray-flow-rate control means so that the water flow rate measured by the second water-spray-flow-rate measurement means approaches a target flow rate determined based on the flow rates measured by the compressed-air flow-rate measurement means and the fuel-flow-rate measurement means.

14. Power supply equipment for a natural gas liquefaction plant which supplies power to the natural gas liquefaction plant for producing liquefied natural gas, the power supply equipment comprising:
a fuel pipe which circulates liquefied natural gas therethrough;
a vaporizer which performs heat exchange between the liquefied natural gas in the fuel pipe and water to heat the liquefied natural gas;
a condenser which performs heat exchange between the liquefied natural gas from the vaporizer and air to evaporate the liquefied natural gas;
a heater which heats the liquefied natural gas from the condenser;
a compressor which compresses the air cooled by the liquefied natural gas in the condenser;
a combustor which mixes the air compressed by the compressor and the natural gas that has passed the heater and combusts the resultant air-gas mixture; and
a gas turbine which is driven by the combustion gas generated by the combustor.

## Amended claims

### Amended claims under Art. 19.1 PCT

**1.** Power supply equipment for a natural gas liquefaction plant which supplies power to the natural gas liquefaction plant for producing liquefied natural gas, the power supply equipment comprising:
a gas turbine system which includes a fuel pipe which circulates liquefied natural gas therethrough, a vaporizer which performs heat exchange between the liquefied natural gas in the fuel pipe and first cooling water to heat the liquefied natural gas, a condenser which performs heat exchange between the liquefied natural gas from the vaporizer and air to evaporate the liquefied natural gas, a compressor which compresses the air cooled by the liquefied natural gas in the condenser, a combustor which mixes the air compressed by the compressor and the natural gas that has passed the condenser and combusts the resultant air-gas mixture, and a gas turbine which is driven by the combustion gas generated by the combustor;
a steam turbine system which includes a heat recovery steam generator which generates steam by use of the exhaust gas of the gas turbine, a steam turbine which is driven by the steam generated by the heat recovery steam generator, and a steam condenser which condenses by use of the first cooling water the steam that drove the steam turbine;
a steam-condenser cooling system which includes a cooling tower for cooling by use of second cooling water the first cooling water cooled by liquefied natural gas in the vaporizer and supplies the first cooling water cooled by the cooling tower to the steam condenser; and
a supply water system which includes a supply water tank which stores the condensed water obtained from the air cooled by the condenser, a first water supply pipe which supplies the water of the supply water tank to the steam turbine system, and a second water supply pipe which supplies the water of the supply water tank to the steam-condenser cooling system.

**2.** Power supply equipment for a natural gas liquefaction plant according to Claim 1, wherein:
the power supply equipment includes a first-cooling-water circulating pump which controls the circulation flow rate of the first cooling water.

**3.** Power supply equipment for a natural gas liquefaction plant according to Claim 1, wherein:
the power supply equipment includes:
a third water supply pipe which supplies the water of the supply water tank to the cooling tower as the second cooling water; and
second-cooling-water-flow-rate control means for controlling the amount of the second cooling water supplied to the cooling tower through the third water supply pipe.

**4.** Power supply equipment for a natural gas liquefaction plant according to Claim 1, wherein:
the power supply equipment includes:
a water recovery system which cools the exhaust gas of the heat recovery steam generator to recover water;
a third-cooling-water circulating pump which controls the circulation flow rate of third cooling water that cools the exhaust gas by use of the water recovery system;
a water treatment system which processes the water from the water recovery system; and
a fourth water supply pipe which supplies the water from the water treatment system to the supply water tank.

**5.** Power supply equipment for a natural gas liquefaction plant which supplies power to the natural gas liquefaction plant for producing liquefied natural gas, the power supply equipment comprising:
a gas turbine system which includes a fuel pipe which circulates liquefied natural gas therethrough, a vaporizer which performs heat exchange between the liquefied natural gas in the fuel pipe and first cooling water to heat the liquefied natural gas, a condenser which performs heat exchange between the liquefied natural gas from the vaporizer and air to evaporate the liquefied natural gas, a compressor which compresses the air cooled by the liquefied natural gas in the condenser, a combustor which mixes the air compressed by the compressor and the natural gas that has passed the condenser and combusts the resultant air-gas mixture, and a gas turbine which is driven by the combustion gas generated by the combustor;
a steam turbine system which includes a heat recovery steam generator which generates steam by use of the exhaust gas of the gas turbine, a steam turbine which is driven by the steam generated by the heat recovery steam generator, and a steam condenser which condenses by use of the first cooling water the steam that drove the steam turbine;
a steam-condenser cooling system which includes a cooling tower for cooling by use of second cooling water the first cooling water cooled by liquefied natural gas in the vaporizer and a first-cooling-water circulating pump which controls the circulating flow rate of the first cooling water and supplies the first cooling water cooled by the cooling tower to the steam condenser; and
a supply water system which includes a supply water tank which stores the condensed water obtained from the air cooled by the condenser, a first water supply pipe which supplies the water of the supply water tank to the steam turbine system, a second water supply pipe which supplies the water of the supply water tank to the steam-condenser cooling system, a third water supply pipe which supplies the water of the supply water tank to the cooling tower as the second cooling water, and second-cooling-water-flow-rate control means for controlling the amount of the second cooling water supplied to the cooling tower through the third water supply pipe.

**6.** Power supply equipment for a natural gas liquefaction plant according to Claim 2, wherein:
the power supply equipment includes:
fuel-temperature measurement means for measuring a temperature of the liquefied natural gas flowing into the condenser from the vaporizer; and
a controller which controls the discharge flow rate of the first cooling-water circulating pump so that the temperature measured by the fuel-temperature measurement means approaches a target temperature determined so as to prevent the freezing of moisture in the air in the condenser.

**7.** Power supply equipment for a natural gas liquefaction plant according to Claim 3, wherein:
the power supply equipment includes:
second-cooling-water-flow-rate measurement means for measuring an amount of the second cooling water supplied to the cooling tower through the third water supply pipe;
first-cooling-water-temperature measurement means for measuring a temperature of the first cooling water flowing into the steam condenser from the cooling tower;
condensed-water-temperature measurement means for measuring the temperature of the liquid water supplied from the steam condenser to the heat recovery steam generator; and
a controller which controls the second-cooling-water-flow-rate control means based on a value measured by the second-cooling-water-flow-rate measurement means so that the temperature measured by the first-cooling-water-temperature measurement means approaches a target temperature determined based on the temperature measured by the condensed-water-temperature measurement means.

**8.** Power supply equipment for a natural gas liquefaction plant according to Claim 7, wherein:
the power supply equipment includes:
a water recovery system which cools the exhaust gas of the heat recovery steam generator to recover water;
a third cooling-water circulating pump which controls a circulation flow rate of third cooling water which cools the exhaust gas by use of the water recovery system;
a water treatment system which processes the water from the water recovery system;
a fourth water supply pipe which supplies the water from the water treatment system to the supply water tank;
recovered-water-flow-rate measurement means for measuring a flow rate of the recovered water supplied to the supply water tank through the fourth water supply pipe; and
condensed-water-flow-rate measurement means for measuring a flow rate of the condensed water supplied from the condenser to the supply water tank; and
wherein the controller controls the discharge amount of the third-cooling-water circulating pump so that the flow rate measured by the recovered-water-flow-rate measurement means approaches a target flow rate determined based on the flow rates measured by the condensed-water-flow-rate measurement means and the second-cooling-water-flow-rate measurement means so as to make constant the differences between inflow and outflow of the water to be used by the supply water system.

**9.** Power supply equipment for a natural gas liquefaction plant according to Claim 1, wherein:
the power supply equipment includes:
a heater which heats the liquefied natural gas from the condenser;
two-phase flow-rate measurement means provided between the heater and the combustor to measure liquid-phase and vapor-phase flow rates of the liquefied natural gas from the heater; and
a controller which controls the output power of the heater based on the liquid-phase flow rate of the liquefied natural gas measured by the two-phase flow-rate measurement means.

**10.** Power supply equipment for a natural gas liquefaction plant according to Claim 1, wherein:
the power supply equipment includes:
an atomizer which sprays water to the air cooled by the condenser; and
a fifth water supply pipe which supplies the water of the supply water tank to the atomizer.

**11.** Power supply equipment for a natural gas liquefaction plant according to Claim 10, wherein:
the power supply equipment includes:
air-temperature measurement means for measuring a temperature of the air flowing into the condenser;
first water-spray-flow-rate measurement means for measuring an amount of the water supplied to the atomizer;
first water-spray-flow-rate control means for controlling an amount of the water supplied to the atomizer; and
a controller which controls the first water-spray-flow-rate control means so that the water flow rate measured by the first water-spray-flow-rate measurement means approaches a target flow rate determined based on the temperature measured by the air-temperature measurement means.

**12.** Power supply equipment for a natural gas liquefaction plant according to Claim 1, wherein:
the power supply equipment includes a sixth water supply pipe which supplies the water of the supply water tank to the combustor.

**13.** Power supply equipment for a natural gas liquefaction plant according to Claim 12, wherein:
the power supply equipment includes:
compressed-air flow-rate measurement means for measuring a flow rate of the compressed air flowing into the combustor;
fuel-flow-rate measurement means for measuring a flow rate of the natural gas flowing into the combustor;
second water-spray-flow-rate measurement means for measuring an amount of the water supplied to the combustor;
second water-spray-flow-rate control means for controlling an amount of the water supplied to the combustor; and
a controller which controls the second water-spray-flow-rate control means so that the water flow rate measured by the second water-spray-flow-rate measurement means approaches a target flow rate determined based on the flow rates measured by the compressed-air flow-rate measurement means and the fuel-flow-rate measurement means.

**14.** Power supply equipment for a natural gas liquefaction plant which supplies power to the natural gas liquefaction plant for producing liquefied natural gas, the power supply equipment comprising:
a fuel pipe which circulates liquefied natural gas therethrough;
a vaporizer which performs heat exchange between the liquefied natural gas in the fuel pipe and water to heat the liquefied natural gas;
a condenser which performs heat exchange between the liquefied natural gas from the vaporizer and air to evaporate the liquefied natural gas;
a heater which heats the liquefied natural gas from the condenser;
a compressor which compresses the air cooled by the liquefied natural gas in the condenser;
a combustor which mixes the air compressed by the compressor and the natural gas that has passed the heater and combusts the resultant air-gas mixture; and
a gas turbine which is driven by the combustion gas generated by the combustor.

**15.** (New) Power supply equipment for a natural gas liquefaction plant which supplies power to the natural gas liquefaction plant for producing liquefied natural gas, the power supply equipment comprising
a gas turbine system which includes a fuel pipe which circulates liquefied natural gas therethrough, a vaporizer which performs heat exchange between the liquefied natural gas in the fuel pipe and first cooling water to heat the liquefied natural gas, a condenser which performs heat exchange between the liquefied natural gas from the vaporizer and air to evaporate the liquefied natural gas, a compressor which compresses the air cooled by the liquefied natural gas in the condenser, a combustor which mixes the air compressed by the compressor and the natural gas that has passed the condenser and combusts the resultant air-gas mixture, and a gas turbine which is driven by the combustion gas generated by the combustor;
a steam turbine system which includes a heat recovery steam generator which generates steam by use of the exhaust gas of the gas turbine, a steam turbine which is driven by the steam generated by the heat recovery steam generator, and a steam condenser which condenses by use of the first cooling water the steam that drove the steam turbine; and
a steam-condenser cooling system which includes a cooling tower for cooling by use of second cooling water the first cooling water cooled by liquefied natural gas in the vaporizer, supplies the first cooling water cooled by the cooling tower to the steam condenser, and supplies the first cooling water heated by steam in the steam condenser to the vaporizer.

Statement under Art. 19.1 PCT
The Applicant adds the Claim 15.

The Claims 1-14 are retained unchanged.
